# EUROPÄISCHE PATENTSCHRIFT

(11) **EP 3 194 188 B1**
(45) Veröffentlichungstag und Bekanntmachung des Hinweises auf die Patenterteilung: **13.06.2018**
(21) Anmeldenummer: 15748270.4
(22) Anmeldetag: 13.08.2015
(51) Int. Cl.: B60G 9/02, B60G 7/00, F16C 11/06

(54) **ACHSAUFHÄNGUNG FÜR EIN FAHRZEUG**
AXLE SUSPENSION SYSTEM FOR A MOTOR VEHICLE
SUSPENSION D'ESSIEU POUR VÉHICULE

(30) Priorität: 15.09.2014 DE 102014218434
(43) Veröffentlichungstag der Anmeldung: 26.07.2017
(73) Patentinhaber: ZF Friedrichshafen AG, 88046 Friedrichshafen (DE)
(72) Erfinder: SCHEPER, Frank, 49624 Loeningen (DE); EILERS, Bernhard, 26897 Bredenberg (DE); KNOPP, Sören, 32351 Stemwede (DE)
(86) Internationale Anmeldenummer: PCT/EP2015/068624
(87) Internationale Veröffentlichungsnummer: WO 2016/041707

(56) Entgegenhaltungen:
- WO-A1-99/28636
- WO-A1-02/094592
- WO-A1-2010/053466
- DE-A1- 3 705 417
- DE-A1- 4 309 004
- DE-C1- 736 351
- DE-C1- 3 718 533
- US-A- 2 180 860
- US-A- 2 713 498
- US-A- 2 746 766
- US-A- 3 895 819
- US-A- 4 415 179

## Beschreibung

Die Erfindung betrifft eine Achsaufhängung für ein Fahrzeug, mit einem Kugelgelenk, welches ein an einem Achskörper einer Fahrzeugachse befestigtes Gelenkgehäuse und eine in diesem gelenkig gelagerte Gelenkkugel umfasst, und einem zwei rahmenseitige Lagerbereiche und einen achsseitigen Lagerbereich umfassenden Achslenker, der in oder mit seinen rahmenseitigen Lagerbereichen an einem Fahrzeugrahmen gelagert ist und in oder mit seinem achsseitigen Lagerbereich durch das Kugelgelenk an den Achskörper angelenkt ist.

Relevante Achsaufhängungen sind in DE 37 05 417 A, US 2 180 860 A, DE 43 09 004 A und Wo 99/28636 A beschrieben.

Die DE 37 18 533 C1 offenbart eine Lagerung eines aus zwei Achsstreben bestehenden Dreieckslenkers zur Führung von LKW-Hinterachsen, die einenends an zwei Lagerstellen am Fahrzeug anlenkbar und anderenends an einem Kugelgelenk am Achskörper gelagert sind, wobei der Öffnungswinkel zwischen den Achsstreben verstellbar ist, und das Kugelgelenk ein Gelenkgehäuse und eine drehbar in dieses eingesetzte Gelenkkugel aufweist. Die Achsstreben ragen in eine Aufnahme der Gelenkkugel hinein, wobei in die Gelenkkugel ein Bolzen eingesetzt ist, der senkrecht zu den Achsstreben durch die Aufnahme verläuft und an dem die Achsstreben mit einer Bohrung gelagert sind. Ferner ist das Gelenkgehäuse mit einem verschließbaren Durchbruch zum Festziehen und Lösen des Bolzens versehen.

Nachteilig an dieser Lösung ist, dass zum Lösen des Achslenkers von dem Achskörper die Gelenkkugel in eine vordefinierte Lage gebracht werden muss, sodass der Bolzen durch den Durchbruch hindurch zugänglich ist.

Ausgehend hiervon liegt der Erfindung die Aufgabe zugrunde, bei einer Achsaufhängung der eingangs genannten Art das Lösen des Achslenkers von dem Achskörper vereinfachen zu können.

Diese Aufgabe wird durch eine Achsaufhängung nach Anspruch 1 gelöst. Bevorzugte Weiterbildungen der Achsaufhängung sind in den Unteransprüchen und in der nachfolgenden Beschreibung gegeben.

Die Achsaufhängung für ein Fahrzeug, insbesondere für ein Kraftfahrzeug, weist ein Kugelgelenk, welches ein an einem Achskörper einer Fahrzeugachse befestigtes Gelenkgehäuse und eine in diesem gelenkig gelagerte Gelenkkugel umfasst, und einen zwei rahmenseitige Lagerbereiche und einen achsseitigen Lagerbereich umfassenden Achslenker auf, der in oder mit seinen rahmenseitigen Lagerbereichen an einem Fahrzeugrahmen gelagert ist und in oder mit seinem achsseitigen Lagerbereich durch das Kugelgelenk an den Achskörper angelenkt ist, wobei das Kugelgelenk einen die Gelenkkugel aufweisenden und sich aus dem Gelenkgehäuse heraus erstreckenden Kugelzapfen umfasst, der einen starr mit der Gelenkkugel verbundenen und außerhalb des Gelenkgehäuses im achsseitigen Lagerbereich lösbar an dem Achslenker befestigten Zapfen aufweist.

Bei dieser Achsaufhängung erfolgt das lösbare Befestigen des Achslenkers an dem Kugelzapfen außerhalb des Gelenkgehäuses. Somit ist die lösbare Befestigung des Achslenkers an dem Kugelzapfen unabhängig von der Lage der Gelenkkugel von außen zugänglich.

Bevorzugt ist der Zapfen mit dem Achslenker verschraubt und/oder der Zapfen ist an dem Achslenker durch eine Schraubverbindung befestigt. Vorteilhaft ist der Zapfen außerhalb des Gelenkgehäuses im achsseitigen Lagerbereich mit dem Achslenker verschraubt und/oder an dem Achslenker durch die oder eine Schraubverbindung befestigt. Dadurch ist der Zapfen insbesondere außerhalb des Gelenkgehäuses im achsseitigen Lagerbereich lösbar an dem Achslenker befestigt. Die Verschraubung und/oder Schraubverbindung ist eine bevorzugte Realisierung der lösbaren Befestigung des Zapfens an dem Achslenker.

Gemäß einer Weiterbildung ist in dem achsseitigen Lagerbereich ein Durchgangsloch vorgesehen, durch welches sich der Zapfen hindurch erstreckt. Der Achslenker ist mit seinem achsseitigen Lagerbereich und/oder mit dem Durchgangsloch bevorzugt auf den Kugelzapfen und/oder auf dessen Zapfen aufgesetzt. Insbesondere ist der Zapfen auf einer der Gelenkkugel abgewandten Seite des achsseitigen Lagerbereichs mit dem Achslenker verschraubt und/oder durch die oder eine Schraubverbindung an dem Achslenker befestigt. Vorteilhaft ist der Zapfen an seinem der Gelenkkugel abgewandten Ende mit einem Außengewinde versehen, auf welches eine Mutter aufgeschraubt ist. Die Mutter ist insbesondere auf einer der Gelenkkugel abgewandten Seite des achsseitigen Lagerbereichs vorgesehen und/oder an dem Achslenker abgestützt und/oder liegt auf einer der Gelenkkugel abgewandten Seite des achsseitigen Lagerbereichs an dem Achslenker an.

Bevorzugt sind der Zapfen und das Durchgangsloch zumindest bereichsweise kegelstumpfförmig ausgebildet und verjüngen sich mit zunehmendem Abstand zur Gelenkkugel. Insbesondere liegen die kegelstumpfförmigen Umfangsflächen des Zapfens und des Durchgangslochs aneinander an. Ergänzend oder alternativ weist der Zapfen einen Anschlag auf, der auf einer der Gelenkkugel zugewandten Seite der achsseitigen Lagerstelle an dem Achslenker abgestützt ist. Insbesondere ist der Anschlag starr mit dem Zapfen verbunden. Vorzugsweise umringt der Anschlag den Zapfen. Der Anschlag ist z.B. als Kegelscheibe ausgebildet.

Gemäß einer Ausgestaltung liegen die rahmenseitigen Lagerbereiche in einer Querrichtung einander gegenüber. Vorteilhaft ist der Achslenker in oder mit seinen rahmenseitigen Lagerbereichen um eine in Querrichtung verlaufende Drehachse schwenkbar an dem Fahrzeugrahmen gelagert. Bei der Querrichtung handelt es sich insbesondere um die Fahrzeugquerrichtung.

Gemäß einer Weiterbildung liegen die Lagerbereiche auf den Ecken eines Dreiecks. Der Achslenker bildet insbesondere einen Dreiecklenker. Bevorzugt erstreckt sich der Achslenker von seinen rahmenseitigen Lagerbereichen aus in einer Längsrichtung. Vorteilhaft weist der achsseitige Lagerbereich zu den rahmenseitigen Lagerbereichen in Längsrichtung oder in einer senkrecht zur Querrichtung verlaufenden Längsrichtung einen Abstand auf. Bevorzugt ist der achsseitige Lagerbereich in Querrichtung mittig angeordnet. Darunter ist insbesondere zu verstehen, dass der achsseitige Lagerbereich in einer senkrecht zur Querrichtung und mittig zwischen den rahmenseitigen Lagerbereichen verlaufenden Längshochebene liegt. Alternativ kann der achsseitige Lagerbereich in Querrichtung aber auch außermittig angeordnet sein, insbesondere wenn der zur Verfügung stehende Bauraum einer mittigen Anordnung des achsseitigen Lagerbereichs entgegensteht. Vorzugsweise erstreckt sich der Zapfen in einer senkrecht zur Längsrichtung und senkrecht zur Querrichtung verlaufenden Hochrichtung.

Gemäß einer Ausgestaltung umfasst der Achslenker zwei Lenkerarme, die sich jeweils von einem der rahmenseitigen Lagerbereiche bis zu dem achsseitigen Lagerbereich erstrecken. Insbesondere sind die Lenkerarme im achsseitigen Lagerbereich starr miteinander verbunden und/oder die Lenkerarme sind insbesondere an ihren dem achsseitigen Lagerbereich zugewandten Enden starr miteinander verbunden und/oder die Lenkerarme sind insbesondere an ihren den rahmenseitigen Lagerbereichen abgewandten Enden starr miteinander verbunden. Dabei können die Lenkerarme z.B. einstückig miteinander ausgebildet sein oder separate Bauteile bilden. Bevorzugt gehen die Lenkerarme im achsseitigen Lagerbereich, insbesondere materialhomogen, ineinander über und/oder die Lenkerarme gehen bevorzugt an ihren dem achsseitigen Lagerbereich zugewandten Enden, insbesondere materialhomogen, ineinander über und/oder die Lenkerarme gehen bevorzugt an ihren den rahmenseitigen Lagerbereichen abgewandten Enden, insbesondere materialhomogen, ineinander über. Die Lenkerarme werden z.B. auch als Achsstreben bezeichnet. Bevorzugt verläuft jeder Lenkerarm ausgehend von dem jeweiligen rahmenseitigen Lagerbereich, insbesondere in Richtung zu dem achsseitigen Lagerbereich, gerade oder über den größten Teil seiner Längserstreckung gerade.

Gemäß einer Weiterbildung liegen die Drehachse und der Mittelpunkt der Gelenkkugel in einer gemeinsamen Ebene. Bevorzugt weist der achsseitige Lagerbereich zu der gemeinsamen Ebene einen Abstand auf, insbesondere in der oder in einer quer zu der gemeinsamen Ebene verlaufenden Hochrichtung. Vorteilhaft liegen die rahmenseitigen Lagerbereiche und/oder deren Lagerachsen oder Kinematikpunkte zusammen mit der Gelenkkugel und/oder deren Mittelpunkt in der oder einer gemeinsamen Ebene. Die gemeinsame Ebene wird z.B. auch als Kinematikpunktebene bezeichnet. Bevorzugt ist der achsseitige Lagerbereich gegenüber der gemeinsamen Ebene in der oder in einer quer zu dieser verlaufenden Hochrichtung versetzt. Vorteilhaft verläuft jeder Lenkerarm ausgehend von dem jeweiligen rahmenseitigen Lagerbereich, insbesondere in Richtung zu dem achsseitigen Lagerbereich, über den größten Teil seiner Längserstreckung gerade und geht in einem Übergangsbereich in den achsseitigen Lagerbereich über. Hierdurch kann die Verdrehung des Achslenkers bei Querlasten gering gehalten werden.

Gemäß einer Ausgestaltung ist der Achslenker in oder mit seinen rahmenseitigen Lagerbereichen jeweils durch ein Elastomerlager an dem Fahrzeugrahmen gelagert, welches z.B. ein Gummilager ist. Bevorzugt umfasst der Achslenker in seinen rahmenseitigen Lagerbereichen jeweils ein Lagerauge, in den jeweils eines der Elastomerlager sitzt.

Jedes Elastomerlager umfasst insbesondere ein Lagerinnenteil und einen dieses umringenden Elastomerkörper, der beispielsweise ein Gummikörper ist. Die Lagerinnenteile der Elastomerlager sind bevorzugt an dem Fahrzeugrahmen befestigt. Jedes Elastomerlager kann direkt mit seinem Elastomerkörper in dem jeweiligen Lagerauge sitzen. Vorzugsweise umfasst jedes Elastomerlager aber eine den Elastomerkörper umringende Außenhülse. Insbesondere sitzt jedes Elastomerlager mit seiner Außenhülse in dem jeweiligen Lagerauge.

Der Achslenker besteht bevorzugt aus einem Faserverbundwerkstoff oder aus Metall, insbesondere aus Aluminium oder aus einem Eisenwerkstoff, wie z.B. Stahl. Besteht der Achslenker aus Metall, kann er beispielsweise als Schmiedebauteil oder als Gussbauteil ausgebildet sein. Die Lenkerarme bestehen bevorzugt aus einem Faserverbundwerkstoff oder aus Metall, insbesondere aus Aluminium oder aus einem Eisenwerkstoff, wie z.B. Stahl. Bestehen die Lenkerarme aus Metall, können sie beispielsweise als Schmiedebauteile oder als Gussbauteile ausgebildet sein. Ferner besteht der Kugelzapfen bevorzugt aus Metall, insbesondere aus einem Eisenwerkstoff, wie z.B. Stahl. Vorzugsweise besteht das Gelenkgehäuse aus einem Faserverbundwerkstoff oder aus Metall, insbesondere aus Aluminium oder aus einem Eisenwerkstoff, wie z.B. Stahl. Besteht das Gelenkgehäuse aus Metall, kann es beispielsweise als Schmiedebauteil oder als Gussbauteil ausgebildet sein.

Der Kugelzapfen kann mit seiner Gelenkkugel direkt in dem Gelenkgehäuse gelagert sein. Gemäß einer Alternative ist die Gelenkkugel unter Zwischenschaltung eines Lagerelements in dem Gelenkgehäuse gelagert. Das Lagerelement besteht bevorzugt aus Kunststoff oder aus Metall. Vorzugsweise ist das Lagerelement als Lagerschale, insbesondere als Kugelschale ausgebildet.

Die Gelenkkugel ist insbesondere einstückig mit dem Zapfen ausgebildet. Vorzugsweise geht der Zapfen materialhomogen in die Gelenkkugel über. Alternativ kann der Zapfen ein separates Bauteil bilden, welches an oder in der Gelenkkugel befestigt ist. Der Zapfen kann z.B. auch als Zapfenbereich, insbesondere als Zapfenbereich des Kugelzapfens, bezeichnet werden. In diesem Sinne kann die Gelenkkugel z.B. auch als kugelförmiger Lagerbereich, insbesondere als kugelförmiger Lagerbereich des Kugelzapfens, bezeichnet werden.

Das Gelenkgehäuse ist insbesondere mit einer Zapfenöffnung versehen, durch welche hindurch sich der Kugelzapfen aus dem Gelenkgehäuse heraus erstreckt. Auf seiner der Zapfenöffnung gegenüberliegenden Seite ist das Gelenkgehäuse vorzugsweise mit einer Montageöffnung versehen, die insbesondere mit einem Gehäusedeckel verschlossen ist. Der Gehäusedeckel besteht bevorzugt aus Metall, insbesondere aus Stahl. Durch die Montageöffnung hindurch kann der Kugelzapfen in das Gelenkgehäuse eingeführt werden. Ist das Lagerelement vorhanden, so kann auch dieses durch die Montageöffnung hindurch in das Gehäuse eingeführt werden.

Das Gelenkgehäuse ist bevorzugt mit dem Achskörper verschraubt. Insbesondere umfasst das Gelenkgehäuse einen Flansch, mittels welchem das Gelenkgehäuse bevorzugt an dem Achskörper befestigt ist. Insbesondere ist der Flansch mit dem Achskörper verschraubt. Vorteilhaft ist der Flansch mit durchgehenden Montagelöchern versehen, durch welche sich Schrauben hindurch erstrecken, mittels welchen das Gelenkgehäuse mit dem Achskörper verschraubt ist. Der Flansch wird z.B. auch als Achsflansch bezeichnet. Ferner wird das den Flansch umfassende Gelenkgehäuse beispielsweise auch als Flanschgehäuse bezeichnet. Der Flansch ist insbesondere starr mit dem Gelenkgehäuse verbunden. Vorteilhaft geht der Flansch materialhomogen in das Gelenkgehäuse über.

An dem Gelenkgehäuse ist bevorzugt eine die Zapfenöffnung und den Kugelzapfen umringende Dichtung festgelegt, die sich von dem Gelenkgehäuse bis zu dem Kugelzapfen erstreckt und dichtend an diesem anliegt. Ferner liegt die Dichtung insbesondere dichtend an dem Gelenkgehäuse an und/oder ist dichtend mit diesem verbunden. Die Dichtung besteht bevorzugt aus Elastomer, beispielsweise aus Gummi. Vorzugsweise handelt es sich bei der Dichtung um einen Dichtungsbalg.

An den in Querrichtung und/oder in Fahrzeugquerrichtung einander gegenüberliegenden Enden des Achskörpers ist bevorzugt jeweils ein Fahrzeugrad drehbar gelagert. Bevorzugt ist der Achskörper durch wenigstens eine Feder, vorzugsweise durch zwei Federn, am Fahrzeugrahmen abgestützt. Ferner ist der Achskörper bevorzugt durch wenigstens einen Dämpfer, vorzugsweise durch zwei Dämpfer, mit dem Fahrzeugrahmen verbunden. Vorteilhaft ist der Achskörper zusätzlich durch wenigstens einen Längslenker, vorzugsweise durch zwei Längslenker oder durch einen Stabilisatorlenker, gelenkig mit dem Fahrzeugrahmen verbunden. In Fahrzeughochrichtung sind dieser oder diese Längslenker oder der Stabilisatorlenker insbesondere unter dem Achslenker angeordnet. Die Fahrzeugachse ist bevorzugt eine Hinterachse.

Das Kugelgelenk ist bevorzugt als Achs- oder Radführungsgelenk für radiale Belastungen ausgebildet. Insbesondere ist das Kugelgelenk integral mit dem Achsflansch ausgebildet, der vorzugsweise an den Achskörper angeschraubt oder anschraubbar ist. Als Ausziehsicherung für den Kugelzapfen, insbesondere bei Einsatz der Lagerschale, dient vorzugsweise die metallische Überdeckung des Flanschgehäuses. Durch die Integration des Kugelgelenks in das Flanschgehäuse sind insbesondere Schmiede- und Gusswerkstoffe mit niedrigerer Zugfestigkeit (Rm-Werten) möglich als bei Achsaufhängungen, bei denen das Kugelgelenk in den Achslenker integriert ist. Die Anbindung des Achslenkers an den Zapfen erfolgt vorzugsweise durch eine normale Verschraubung, beispielsweise mit oder ohne Kegelscheibe. Bevorzugt wird der Achslenker zum größten Teil auf der Ebene der drei Kinematikpunkte gehalten, um erst kurz vor der Anbindung an den Achskörper die Ebene zu verlassen. Somit kann beispielsweise die Verdrehung bei Querlasten bei einem minimalen Einsatz von Material so gering wie möglich gehalten werden. Beim Austausch des Kugelgelenks ist z.B. eine Demontage des Flansches vom Achskörper ohne Demontage des Achslenkers von dem Fahrzeugrahmen möglich. Auch lässt sich die Verschraubung zwischen dem Achslenker und dem Zapfen einfach lösen. Ferner kann die spanende Bearbeitung des Flanschgehäuses und des Achslenkers vereinfacht werden. Schließlich lässt sich der Achslenker einfach montieren.

Die Erfindung betrifft ferner ein Fahrzeug, insbesondere Kraftfahrzeug, mit einem Fahrzeugrahmen und einer oder wenigstens einer Fahrzeugachse, die mit dem Fahrzeugrahmen über eine Achsaufhängung verbunden ist, die ein Kugelgelenk, welches ein an einem Achskörper der Fahrzeugachse befestigtes Gelenkgehäuse und eine in diesem gelenkig gelagerte Gelenkkugel umfasst, und einen zwei rahmenseitige Lagerbereiche und einen achsseitigen Lagerbereich umfassenden Achslenker aufweist, der in oder mit seinen rahmenseitigen Lagerbereichen an dem Fahrzeugrahmen gelagert ist und in oder mit seinem achsseitigen Lagerbereich durch das Kugelgelenk an den Achskörper angelenkt ist, wobei das Kugelgelenk einen die Gelenkkugel aufweisenden und sich aus dem Gelenkgehäuse heraus erstreckenden Kugelzapfen umfasst, der einen starr mit der Gelenkkugel verbundenen und außerhalb des Gelenkgehäuses im achsseitigen Lagerbereich lösbar an dem Achslenker befestigten Zapfen aufweist.

Das Fahrzeug, insbesondere dessen Achsaufhängung, kann gemäß allen im Zusammenhang mit der Achsaufhängung erläuterten Ausgestaltungen weitergebildet sein.

Die Erfindung wird nachfolgend anhand bevorzugter Ausführungsformen unter Bezugnahme auf die Zeichnung beschrieben. In der Zeichnung zeigen:
- Fig. 1: eine schematische Draufsicht auf eine Achsaufhängung gemäß einer ersten Ausführungsform,
- Fig. 2: einen Schnitt durch die Achsaufhängung gemäß der ersten Ausführungsform entlang der aus Fig. 1 ersichtlichen Schnittlinie A-A, wobei Teile der Achsaufhängung weggelassen sind,
- Fig. 3: eine schematische Seitenansicht eines Achslenkers der Achsaufhängung gemäß der ersten Ausführungsform,
- Fig. 4: eine Draufsicht auf eine Achsaufhängung gemäß einer zweiten Ausführungsform,
- Fig. 5: einen Schnitt durch die Achsaufhängung gemäß der zweiten Ausführungsform entlang der aus Fig. 4 ersichtlichen Schnittlinie B-B, wobei Teile der Achsaufhängung weggelassen sind und
- Fig. 6: eine Seitenansicht eines Achslenkers der Achsaufhängung gemäß der zweiten Ausführungsform.

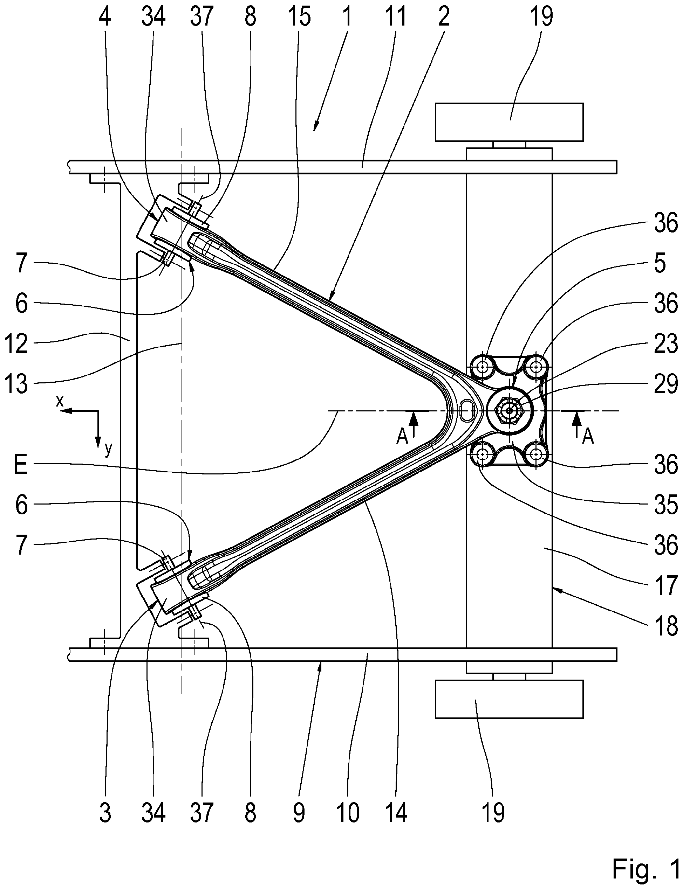

Aus Fig. 1 ist eine schematische Draufsicht auf eine Achsaufhängung 1 gemäß einer ersten Ausführungsform ersichtlich, wobei ein als Dreiecklenker ausgebildeter Achslenker 2 zwei rahmenseitige Lagerbereiche 3 und 4 sowie einen achsseitigen Lagerbereich 5 aufweist. Die rahmenseitigen Lagerbereiche 3 und 4 liegen in einer Fahrzeugquerrichtung y einander gegenüber und umfassen jeweils ein Lagerauge 34, in welches ein Gummilager 6 eingesetzt ist. Die Gummilager 6 umfassen jeweils ein Lagerinnenteil 7 und einen dieses umringenden Gummikörper 8, der in dem jeweiligen Lagerauge 34 sitzt. Dabei sind die Lagerinnenteile 7 jeweils mit einem Fahrzeugrahmen 9 verbunden, der zwei in einer Fahrzeuglängsrichtung x verlaufende und in Fahrzeugquerrichtung y einander gegenüberliegende Längsträger 10 und 11 sowie mehrere in Fahrzeugquerrichtung y verlaufende Querträger 12 aufweist, durch welche die Längsträger 10 und 11 miteinander verbunden sind (in Fig. 1 ist lediglich ein Querträger gezeigt). Durch die Gummilager 6 ist der Achslenker 2 um eine in Fahrzeugquerrichtung y verlaufende Drehachse 13 schwenkbar am Fahrzeugrahmen 9 gelagert. Die Fahrzeugquerrichtung y verläuft dabei senkrecht zur Fahrzeuglängsrichtung x.

Der Achslenker 2 umfasst zwei Lenkerarme 14 und 15, die sich jeweils von einem der rahmenseitigen Lagerbereiche bis zu dem achsseitigen Lagerbereich 5 erstrecken. Dabei erstreckt sich der Lenkerarm 14 von dem rahmenseitigen Lagerbereich 3 bis zu dem achsseitigen Lagerbereich 5, und der Lenkerarm 15 erstreckt sich von dem rahmenseitigen Lagerbereich 4 bis zu dem achsseitigen Lagerbereich 5. Die Lenkerarme 14 und 15 sind an ihren den rahmenseitigen Lagerbereichen 3 und 4 abgewandten Enden starr miteinander verbunden und gehen dort insbesondere materialhomogen ineinander über. Die Lagerbereiche 3, 4 und 5 liegen auf den Ecken eines Dreiecks, wobei der achsseitige Lagerbereich 5 in einer senkrecht zur Querrichtung y verlaufenden Längshochebene E liegt, die in Fahrzeugquerrichtung y mittig zwischen den beiden rahmenseitigen Lagerbereichen 3 und 4 verläuft. Gemäß Fig. 1 verläuft auch die Schnittlinie A-A in der Längshochebene E.

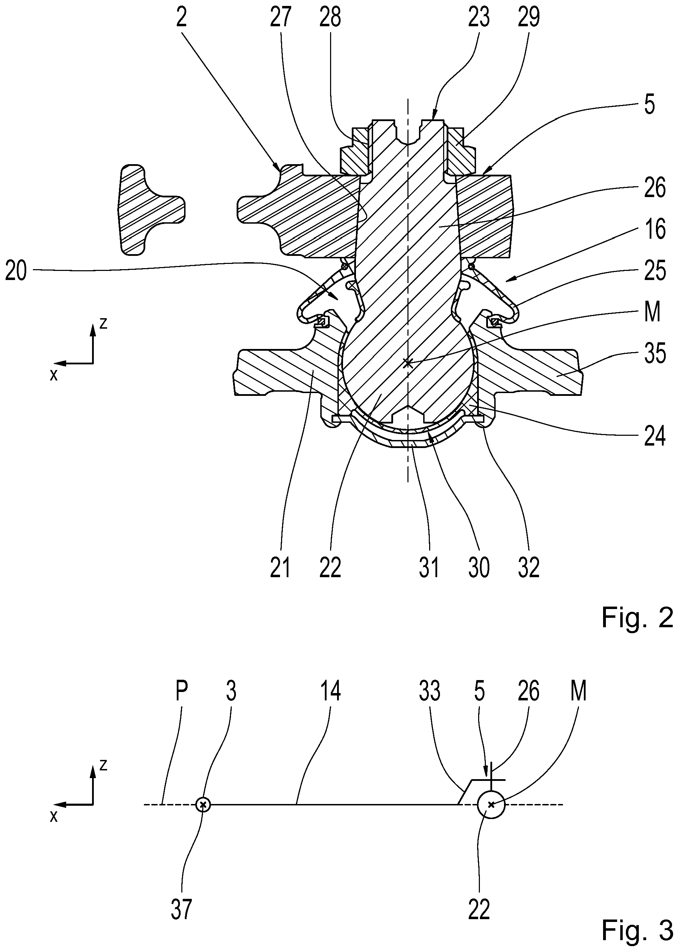

Im achsseitigen Lagerbereich 5 ist der Achslenker 2 durch ein Kugelgelenk 16 (siehe Fig. 2) an einen Achskörper 17 einer Fahrzeugachse 18 angelenkt, die ferner zwei Fahrzeugräder 19 umfasst, die an in Fahrzeugquerrichtung y einander gegenüberliegenden Enden des Achskörpers 17 drehbar gelagert sind. Das Kugelgelenk 16 ist aus Fig. 2 ersichtlich, die eine Schnittansicht des Achslenkers 2 entlang der aus Fig. 1 ersichtlichen Schnittlinie A-A zeigt, wobei der Achskörper 17 weggelassen wurde. Das Kugelgelenk 16 umfasst ein mit einer Zapfenöffnung 20 versehendes Gelenkgehäuse 21 und einen eine Gelenkkugel 22 umfassenden Kugelzapfen 23, der mit seiner Gelenkkugel 22 unter Zwischenschaltung eines Lagerelements 24 in Form einer Kugelschale gelenkig in dem Gelenkgehäuse 21 gelagert ist und sich durch die Zapfenöffnung 20 hindurch in einer Fahrzeughochrichtung z aus dem Gelenkgehäuse 21 heraus erstreckt. Die Zapfenöffnung 20 ist durch einen Dichtungsbalg 25 abgedeckt, der an dem Gelenkgehäuse 21 festgelegt ist, sich bis zu dem Kugelzapfen 23 erstreckt und dichtend an diesem anliegt. Die Fahrzeughochrichtung z verläuft senkrecht zur Fahrzeuglängsrichtung x und zur Fahrzeugquerrichtung y, wobei die Fahrzeuglängsrichtung x, die Fahrzeugquerrichtung y und die Fahrzeughochrichtung z in dieser Reihenfolge ein Rechtssystem bilden.

Der Kugelzapfen 23 weist einen starr mit der Gelenkkugel 22 verbundenen Zapfen 26 auf, der bereichsweise kegelstumpfförmig ausgebildet ist und sich mit zunehmendem Abstand zur Gelenkkugel 22 verjüngt. Der Zapfen 26 erstreckt sich durch ein in dem achsseitigen Lagerbereich 5 vorgesehenes Durchgangsloch 27 hindurch, welches ebenfalls kegelstumpfförmig ausgebildet ist und sich mit zunehmendem Abstand zur Gelenkkugel 22 verjüngt. Die kegelförmigen Umfangsflächen des Zapfens 26 und des Durchgangslochs 27 liegen dabei aneinander an. An seinem der Gelenkkugel 22 abgewandten Ende ist der Zapfen 26 mit einem Außengewinde 28 versehen, auf welches eine Mutter 29 aufgeschraubt ist, die auf einer der Gelenkkugel 22 abgewandten Seite des achsseitigen Lagerbereichs 5 an dem Achslenker 2 abgestützt ist.

Auf seiner der Zapfenöffnung 20 gegenüberliegenden Seite ist das Gelenkgehäuse 21 mit einer Montageöffnung 30 versehen, die von einem Gehäusedeckel 31 abgedeckt ist, der durch einen umgebördelten Gehäuserand 32 an dem Gelenkgehäuse 21 festgelegt ist. Durch die Montageöffnung 30 hindurch sind der Kugelzapfen 23 und das Lagerelement 24 in das Gelenkgehäuse eingesetzt worden, wonach die Montageöffnung 30 durch den Gehäusedeckel 31 verschlossen worden ist. Ferner ist das Gelenkgehäuse 21 an seinem dem Achskörper 17 zugewandten Ende zu einem Flansch 35 erweitert, der durch Schrauben 36 an dem Achskörper 17 festgeschraubt ist.

Fig. 3 zeigt eine schematische Seitenansicht des Achslenkers 2, woraus ersichtlich ist, dass der Mittelpunkt M der Gelenkkugel 22, der Lenkerarm 14 sowie die Lagerachse 37 des rahmenseitigen Lagerbereichs 3 in einer gemeinsamen und in Fahrzeugquerrichtung y verlaufenen Ebene P liegen, die z.B. auch als Kinematikpunktebene bezeichnet werden kann. Ferner liegen der Lenkerarm 15 und die Lagerachse 37 des rahmenseitigen Lagerbereichs 4 in dieser Ebene P. Auch liegt die Drehachse 13 in der Ebene P. Die Lenkerarme 14 und 15 erstrecken sich somit über nahezu ihre gesamte Länge gerade in der Ebene P. Erst kurz vor Erreichen des achsseitigen Lagerbereichs 5, der in Fahrzeughochrichtung z über der Ebene P liegt, gehen die Lenkerarme 14 und 15 in einem oder jeweils einem Übergangsbereich 33 in den achsseitigen Lagerbereich 5 über.

Da der Achslenker 2 um die Drehachse 13 relativ zu dem Fahrzeugrahmen 9 schwenken kann, können der Achsaufhängung 1 auch eine eigene Längsrichtung und eine eigene Hochrichtung zugeordnet werden. Die Längsrichtung der Achsaufhängung 1 verläuft dann insbesondere senkrecht zur Fahrzeugquerrichtung y und durch den Mittelpunkt M der Gelenkkugel 22. Vorzugsweise schneidet die Längsrichtung der Achsaufhängung 1 die Drehachse 13. Ferner verläuft die Hochrichtung der Achsaufhängung 1 insbesondere quer zur Längsrichtung der Achsaufhängung 1 und quer zur Fahrzeugquerrichtung y, wobei die Längsrichtung der Achsaufhängung 1, die Fahrzeugquerrichtung y und die Hochrichtung der Achsaufhängung 1 in dieser Reihenfolge insbesondere ein Rechtssystem bilden. Mögliche Lageänderungen der Drehachse 13 relativ zur Fahrzeugquerrichtung y wurden dabei vernachlässigt, obwohl solche Lageänderungen, auch wenn sie klein sind, aufgrund der Gummilager 6 grundsätzlich möglich sind. Sollen auch solche Lageänderungen berücksichtigt werden, ist der Achsaufhängung 1 insbesondere ferner eine eigene Querrichtung zuzuordnen, die vorzugsweise durch die Mittelpunkte der Lageraugen 34 verläuft. Diese Mittelpunkte bilden insbesondere die Kinematikpunkte der rahmenseitigen Lagerbereiche 3 und 4. Gemäß der in den Fig. 1 bis 3 gezeigten Ausrichtung des Achslenkers 2, fällt die Längsrichtung der Achsaufhängung 1 allerdings mit der Fahrzeuglängsrichtung x zusammen. Ferner fällt gemäß der in den Fig. 1 bis 3 gezeigten Ausrichtung des Achslenkers 2 die Hochrichtung der Achsaufhängung 1 mit der Fahrzeughochrichtung z zusammen.

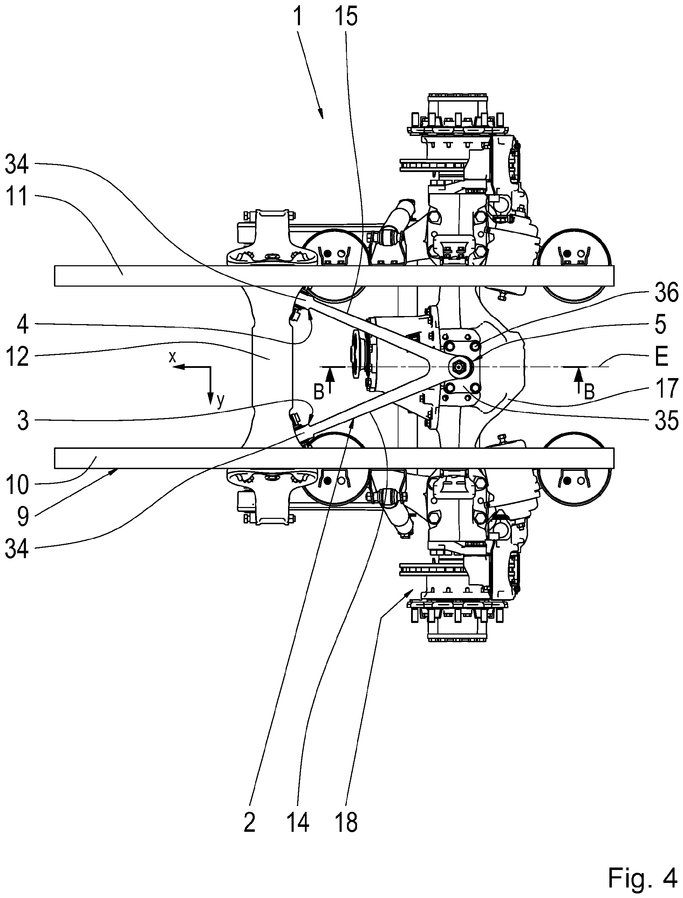

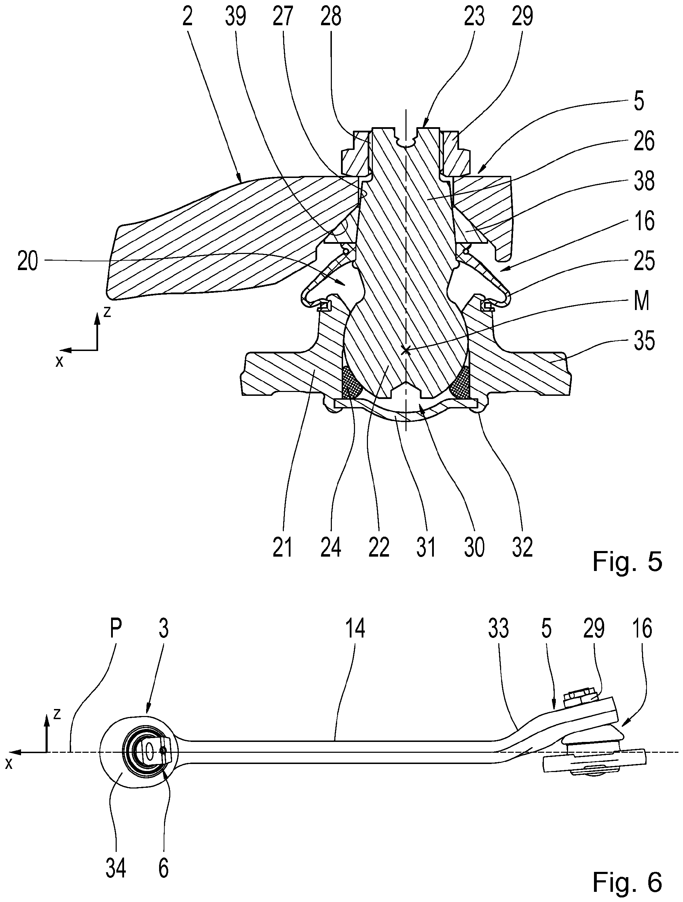

Aus den Fig. 4 bis 6 sind unterschiedliche Ansichten und Teilansichten einer Achsaufhängung 1 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Im Unterschied zur ersten Ausführungsform ist auf den Zapfen 26 eine Kegelscheibe 38 aufgesetzt und starr mit diesem verbunden. Das Durchgangsloch 27 ist zylindrisch ausgebildet und weist an seinem der Gelenkkugel 22 zugewandten Ende eine kegelstumpfförmige Erweiterung 39 auf, in welcher die Kegelscheibe 38 sitzt und an dem Achslenker 2 anliegt. Ferner ist das Lagerelement 24 gemäß der zweiten Ausführungsform ringförmig ausgebildet. Abgesehen von diesen Unterschieden stimmt die zweite Ausführungsform im Wesentlichen mit der ersten Ausführungsform überein, sodass zur weiteren Beschreibung der zweiten Ausführungsform auf die Beschreibung der ersten Ausführungsform verwiesen wird.

### Bezugszeichen

- 1: Achsaufhängung
- 2: Achslenker
- 3: rahmenseitiger Lagerbereich des Achslenkers
- 4: rahmenseitiger Lagerbereich des Achslenkers
- 5: achsseitiger Lagerbereich des Achslenkers
- 6: Gummilager
- 7: Lagerinnenteil des Gummilagers
- 8: Gummikörper des Gummilagers
- 9: Fahrzeugrahmen
- 10: Längsträger des Fahrzeugrahmens
- 11: Längsträger des Fahrzeugrahmens
- 12: Querträger des Fahrzeugrahmens
- 13: Drehachse
- 14: Lenkerarm des Achslenkers
- 15: Lenkerarm des Achslenkers
- 16: Kugelgelenk
- 17: Achskörper der Fahrzeugachse
- 18: Fahrzeugachse
- 19: Fahrzeugrad
- 20: Zapfenöffnung des Gelenkgehäuses
- 21: Gelenkgehäuse des Kugelgelenks
- 22: Gelenkkugel des Kugelzapfens
- 23: Kugelzapfen des Kugelgelenks
- 24: Lagerelement
- 25: Dichtungsbalg
- 26: Zapfen des Kugelzapfens
- 27: Durchgangsloch im achsseitigen Lagerbereich
- 28: Außengewinde an Kugelzapfen
- 29: Mutter
- 30: Montageöffnung des Gelenkgehäuses
- 31: Gehäusedeckel
- 32: Gehäuserand
- 33: Übergangsbereich
- 34: Lagerauge des Achslenkers
- 35: Flansch des Gelenkgehäuses
- 36: Schraube
- 37: Lagerachse des Lagerbereichs
- 38: Kegelscheibe
- 39: kegelstumpfförmige Erweiterung des Durchgangslochs

- E: Längshochebene
- M: Mittelpunkt der Gelenkkugel
- P: Ebene / Kinematikpunktebene
- x: Fahrzeuglängsrichtung
- y: Fahrzeugquerrichtung
- z: Fahrzeughochrichtung

## Patentansprüche

1. Achsaufhängung für ein Fahrzeug, mit einem Kugelgelenk (16), welches ein an einem Achskörper (17) einer Fahrzeugachse (18) befestigtes Gelenkgehäuse (21) und eine in diesem gelenkig gelagerte Gelenkkugel (22) umfasst, und einem zwei rahmenseitige Lagerbereiche (3, 4) und einen achsseitigen Lagerbereich (5) umfassenden Achslenker (2), der in oder mit seinen rahmenseitigen Lagerbereichen (3, 4) an einem Fahrzeugrahmen (9) gelagert ist und in oder mit seinem achsseitigen Lagerbereich (5) durch das Kugelgelenk (16) an den Achskörper (17) angelenkt ist, **dadurch gekennzeichnet, dass** das Kugelgelenk (16) einen die Gelenkkugel (22) aufweisenden und sich aus dem Gelenkgehäuse (21) heraus erstreckenden Kugelzapfen (23) umfasst, der einen starr mit der Gelenkkugel (22) verbundenen und außerhalb des Gelenkgehäuses (21) im achsseitigen Lagerbereich (5) lösbar an dem Achslenker (2) befestigten Zapfen (26) aufweist.

2. Achsaufhängung nach Anspruch 1, **dadurch gekennzeichnet, dass** in dem achsseitigen Lagerbereich (5) ein Durchgangsloch (27) vorgesehen ist, durch welches sich der Zapfen (26) hindurch erstreckt.

3. Achsaufhängung nach Anspruch 2, **dadurch gekennzeichnet, dass** der Zapfen (26) an seinem der Gelenkkugel (22) abgewandten Ende mit einem Außengewinde (28) versehen ist, auf welches eine Mutter (29) aufgeschraubt ist, die auf einer der Gelenkkugel (22) abgewandten Seite des achsseitigen Lagerbereichs (5) an dem Achslenker (2) abgestützt ist.

4. Achsaufhängung nach Anspruch 2 oder 3, **dadurch gekennzeichnet, dass** der Zapfen (26) und das Durchgangsloch (27) zumindest bereichsweise kegelstumpfförmig ausgebildet sind und sich mit zunehmendem Abstand zur Gelenkkugel (22) verjüngen, wobei die kegelstumpfförmigen Umfangsflächen des Zapfens (26) und des Durchgangslochs (27) aneinander anliegen.

5. Achsaufhängung nach einem der vorangehenden Ansprüche, **dadurch gekennzeichnet, dass** die rahmenseitigen Lagerbereiche (3, 4) in einer Querrichtung (y) einander gegenüberliegen.

6. Achsaufhängung nach Anspruch 5, **dadurch gekennzeichnet, dass** der Achslenker (2) in oder mit seinen rahmenseitigen Lagerbereichen (3, 4) um eine in Querrichtung (y) verlaufende Drehachse (13) schwenkbar an dem Fahrzeugrahmen (9) gelagert ist.

7. Achsaufhängung nach Anspruch 5 oder 6, **dadurch gekennzeichnet, dass** der achsseitige Lagerbereich (5) zu den rahmenseitigen Lagerbereichen (3, 4) in einer senkrecht zur Querrichtung (y) verlaufenden Längsrichtung (x) versetzt angeordnet ist.

8. Achsaufhängung nach einem der Ansprüche 5 bis 7, **dadurch gekennzeichnet, dass** der achsseitige Lagerbereich (5) in Querrichtung (y) mittig angeordnet ist.

9. Achsaufhängung nach Anspruch 7 oder 8, **dadurch gekennzeichnet, dass** der Zapfen (26) sich in einer senkrecht zur Längsrichtung (x) und senkrecht zur Querrichtung (y) verlaufenden Hochrichtung (z) erstreckt.

10. Achsaufhängung nach einem der vorangehenden Ansprüche, **dadurch gekennzeichnet, dass** der Achslenker (2) zwei Lenkerarme (14, 15) umfasst, die sich jeweils von einem der rahmenseitigen Lagerbereiche (3, 4) bis zu dem achsseitigen Lagerbereich (5) erstrecken.

11. Achsaufhängung nach Anspruch 10, **dadurch gekennzeichnet, dass** die Lenkerarme (14, 15) an ihren dem achsseitigen Lagerbereich (5) zugewandten Enden starr miteinander verbunden sind.

12. Achsaufhängung nach einem der vorangehenden Ansprüche, **dadurch gekennzeichnet, dass** die rahmenseitigen Lagerbereiche (3, 4) zusammen mit dem Mittelpunkt (M) der Gelenkkugel (22) in einer gemeinsamen Ebene (P) liegen.

13. Achsaufhängung nach Anspruch 14 und nach Anspruch 10 oder 11, **dadurch gekennzeichnet, dass** jeder Lenkerarm (14, 15) ausgehend von dem jeweiligen rahmenseitigen Lagerbereich (3, 4) über den größten Teil seiner Längserstreckung gerade verläuft und in einem Übergangsbereich (33) in den achsseitigen Lagerbereich (5) übergeht, der gegenüber der gemeinsamen Ebene (P) in einer quer zu dieser verlaufenden Hochrichtung (z) versetzt ist.

14. Achsaufhängung nach einem der vorangehenden Ansprüche, **dadurch gekennzeichnet, dass** der Achslenker (2) in oder mit seinen rahmenseitigen Lagerbereichen (3, 4) jeweils durch ein Elastomerlager (6) an dem Fahrzeugrahmen (9) gelagert ist.

15. Achsaufhängung nach Anspruch 14, **dadurch gekennzeichnet, dass** der Achslenker (2) in seinen rahmenseitigen Lagerbereichen (3, 4) jeweils ein Lagerauge (34) umfasst, in dem jeweils eines der Elastomerlager (6) sitzt.

## Claims

1. Axle suspension arrangement for a vehicle, having a ball joint (16), which comprises a joint housing (21) fastened to an axle body (17) of a vehicle axle (18) and a joint ball (22) mounted in articulated fashion in said joint housing, and having an axle link (2), which comprises two frame-side bearing regions (3, 4) and one axle-side bearing region (5), which axle link is mounted in or by means of its frame-side bearing regions (3, 4) on a vehicle frame (9) and is articulated in or by means of its axle-side bearing region (5) on the axle body (17) by means of the ball joint (16), **characterized in that** the ball joint (16) comprises a ball pin (23), which ball pin has the joint ball (22) and extends out of the joint housing (21) and has a pin (26) which is connected rigidly to the joint ball (22) and which, outside the joint housing (21), is detachably fastened in the axle-side bearing region (5) to the axle link (2).

2. Axle suspension arrangement according to Claim 1, **characterized in that**, in the axle-side bearing region (5), there is provided a passage hole (27) through which the pin (26) extends.

3. Axle suspension arrangement according to Claim 2, **characterized in that** the pin (26) is equipped, on its end averted from the joint ball (22), with an external thread (28) onto which a nut (29) is screwed, which nut is supported on a side, averted from the joint ball (22), of the axle-side bearing region (5) on the axle link (2).

4. Axle suspension arrangement according to Claim 2 or 3, **characterized in that** the pin (26) and the passage hole (27) are of frustoconical form at least in regions and narrow with increasing distance to the joint ball (22), wherein the frustoconical circumferential surfaces of the pin (26) and of the passage hole (27) bear against one another.

5. Axle suspension arrangement according to one of the preceding claims, **characterized in that** the frame-side bearing regions (3, 4) are situated opposite one another in a transverse direction (y).

6. Axle suspension arrangement according to Claim 5, **characterized in that** the axle link (2) is mounted in or by means of its frame-side bearing regions (3, 4) on the vehicle frame (9) in a manner pivotable about an axis of rotation (13) running in the transverse direction (y).

7. Axle suspension arrangement according to Claim 5 or 6, **characterized in that** the axle-side bearing region (5) is arranged offset with respect to the frame-side bearing regions (3, 4) in a longitudinal direction (x) running perpendicular to the transverse direction (y).

8. Axle suspension arrangement according to one of Claims 5 to 7, **characterized in that** the axle-side bearing region (5) is arranged centrally in the transverse direction (y).

9. Axle suspension arrangement according to Claim 7 or 8, **characterized in that** the pin (26) extends in a vertical direction (z) running perpendicular to the longitudinal direction (x) and perpendicular to the transverse direction (y).

10. Axle suspension arrangement according to one of the preceding claims, **characterized in that** the axle link (2) comprises two link arms (14, 15) which extend in each case from one of the frame-side bearing regions (3, 4) to the axle-side bearing region (5).

11. Axle suspension arrangement according to Claim 10, **characterized in that** the link arms (14, 15) are rigidly connected to one another at their ends facing toward the axle-side bearing region (5).

12. Axle suspension arrangement according to one of the preceding claims, **characterized in that** the frame-side bearing regions (3, 4) lie in a common plane (P) together with the central point (M) of the joint ball (22) .

13. Axle suspension arrangement according to Claim 14 and according to Claim 10 or 11, **characterized in that** each link arm (14, 15) runs in straight fashion over the major part of its longitudinal extent proceeding from the respective frame-side bearing region (3, 4) and transitions, in a transition region (33), into the axle-side bearing region (5), which is offset with respect to the common plane (P) in a vertical direction (z) running transversely with respect to said plane.

14. Axle suspension arrangement according to one of the preceding claims, **characterized in that** the axle link (2) is mounted in or by means of its frame-side bearing regions (3, 4) on the vehicle frame (9) in each case by means of an elastomer bearing (6).

15. Axle suspension arrangement according to Claim 14, **characterized in that** the axle link (2) comprises, in its frame-side bearing regions (3, 4), in each case one bearing eyelet (34) in which in each case one of the elastomer bearings (6) is seated.

## Revendications

1. Suspension d'essieu pour un véhicule, comprenant une articulation à rotule (16) qui comprend un boîtier d'articulation (21) fixé à un corps d'essieu (17) d'un essieu de véhicule (18) et une rotule d'articulation (22) supportée de manière articulée dans celui-ci, et un bras d'essieu (2) comprenant deux régions de palier (3, 4) du côté du châssis et une région de palier (5) du côté de l'essieu, lequel est supporté dans un châssis du véhicule (9) ou sur celui-ci par ses régions de palier (3, 4) du côté du châssis et est articulé dans le corps d'essieu (17) ou sur celui-ci au moyen de sa région de palier (5) du côté de l'essieu par l'articulation à rotule (16), **caractérisée en ce que** l'articulation à rotule (16) comprend un tourillon à rotule (23) présentant la rotule d'articulation (22) et s'étendant hors du boîtier d'articulation (21), lequel présente un tourillon (26) connecté rigidement à la rotule d'articulation (22) et fixé au bras d'essieu (2) de manière détachable à l'extérieur du boîtier d'articulation (21) dans la région du palier (5) du côté de l'essieu.

2. Suspension d'essieu selon la revendication 1, **caractérisée en ce qu'**un trou traversant (27) est prévu dans la région de palier (5) du côté de l'essieu, à travers lequel s'étend le tourillon (26) .

3. Suspension d'essieu selon la revendication 2, **caractérisée en ce que** le tourillon (26) est pourvu, au niveau de son extrémité opposée à la rotule d'articulation (22), d'un filetage extérieur (28) sur lequel est vissé un écrou (29) qui est supporté sur le bras d'essieu (2) au niveau d'un côté de la région de palier (5) du côté de l'essieu opposé à la rotule d'articulation (22) .

4. Suspension d'essieu selon la revendication 2 ou 3, **caractérisée en ce que** le tourillon (26) et le trou traversant (27) sont réalisés au moins en partie sous forme tronconique et se rétrécissent en s'éloignant de la rotule d'articulation (22), les surfaces périphériques de forme tronconique du tourillon (26) et du trou traversant (27) s'appliquant l'une contre l'autre.

5. Suspension d'essieu selon l'une quelconque des revendications précédentes, **caractérisée en ce que** les régions de palier (3, 4) du côté du châssis sont opposées l'une à l'autre dans une direction transversale (y).

6. Suspension d'essieu selon la revendication 5, **caractérisée en ce que** le bras d'essieu (2) est supporté de manière pivotante dans le châssis de véhicule (9) ou sur celui-ci avec ses régions de palier (3, 4) du côté du châssis autour d'un axe de rotation (13) s'étendant la direction transversale (y).

7. Suspension d'essieu selon la revendication 5 ou 6, **caractérisée en ce que** la région de palier (5) du côté de l'essieu est disposée de manière décalée par rapport aux régions de palier (3, 4) du côté du châssis dans une direction longitudinale (x) s'étendant perpendiculairement à la direction transversale (y).

8. Suspension d'essieu selon l'une quelconque des revendications 5 à 7, **caractérisée en ce que** la région de palier (5) du côté de l'essieu est disposée centralement dans la direction transversale (y).

9. Suspension d'essieu selon la revendication 7 ou 8, **caractérisée en ce que** le tourillon (26) s'étend dans une direction verticale (z) s'étendant perpendiculairement à la direction longitudinale (x) et perpendiculairement à la direction transversale (y).

10. Suspension d'essieu selon l'une quelconque des revendications précédentes, **caractérisée en ce que** le bras d'essieu (2) comprend deux bras oscillants (14, 15) qui s'étendent à chaque fois depuis l'une des régions de palier (3, 4) du côté du châssis jusqu'à la région de palier (5) du côté de l'essieu.

11. Suspension d'essieu selon la revendication 10, **caractérisée en ce que** les bras oscillants (14, 15) sont connectés rigidement l'un à l'autre au niveau de leurs extrémités tournées vers la région de palier (5) du côté de l'essieu.

12. Suspension d'essieu selon l'une quelconque des revendications précédentes, **caractérisée en ce que** les régions de palier (3, 4) du côté du châssis sont situées conjointement avec le centre (M) de la rotule d'articulation (22) dans un plan commun (P).

13. Suspension d'essieu selon la revendication 14 et selon la revendication 10 ou 11, **caractérisée en ce que** chaque bras oscillant (14, 15) s'étend en ligne droite à partir de la région de palier (3, 4) respective du côté du châssis sur la majeure partie de son étendue longitudinale et se prolonge par une région de transition (33) dans la région de palier (5) du côté de l'essieu qui est décalée par rapport au plan commun (P) dans une direction verticale (z) s'étendant transversalement à celui-ci.

14. Suspension d'essieu selon l'une quelconque des revendications précédentes, **caractérisée en ce que** le bras d'essieu (2) est supporté dans le châssis de véhicule (9) ou sur celui-ci avec ses régions de palier (3, 4) du côté du châssis à chaque fois par une couche en élastomère (6).

15. Suspension d'essieu selon la revendication 14, **caractérisée en ce que** le bras d'essieu (2) comprend, dans ses régions de palier (3, 4) du côté du châssis, à chaque fois un oeillet de palier (34) dans lequel repose à chaque fois l'une des couches en élastomère (6).
